(19) Europäisches Patentamt
European Patent Office
Office européen des brevets

(11) **EP 4 786 917 A1**

(12) **EUROPEAN PATENT APPLICATION**
published in accordance with Art. 153(4) EPC

(43) Date of publication:
**05.08.2026 Bulletin 2026/32**

(21) Application number: **23954336.6**

(22) Date of filing: **29.09.2023**

(51) International Patent Classification (IPC):
**G01B 11/24** (2006.01)   **G01B 9/021** (2006.01)
**G01N 21/45** (2006.01)

(52) Cooperative Patent Classification (CPC):
**G01B 9/021; G01B 11/24; G01N 21/45**

(86) International application number:
**PCT/JP2023/035604**

(87) International publication number:
**WO 2025/069367 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: Otsuka Electronics Co., Ltd.
Hirakata-shi, Osaka 573-1132 (JP)

(72) Inventors:
• **SHIMODA, Kensaku**
**Hirakata-shi, Osaka 573-1132 (JP)**
• **SANO, Hiroyuki**
**Hirakata-shi, Osaka 573-1132 (JP)**

(74) Representative: **Hoffmann Eitle**
**Patent- und Rechtsanwälte PartmbB**
**Arabellastraße 30**
**81925 München (DE)**

(54) **OPTICAL MEASURING SYSTEM, OPTICAL MEASURING METHOD, AND MEASUREMENT PROGRAM**

(57)    An optical measurement system includes a light source that generates coherent light, a first beam splitter that divides the coherent light from the light source into first light and second light, an image sensor that records a hologram generated by modulation with the second light, of light obtained by illumination of a sample with the first light, and a processing apparatus. The second light is diverging light. A processing apparatus performs calculating a second hologram representing an image at a position distant by a predetermined distance from the image sensor based on a first hologram that is recorded by the image sensor and calculating, based on the second hologram, a third hologram representing an image at an inclined surface set at an inclination with respect to a recording surface of the image sensor. Calculating the third hologram includes coordinate transformation in accordance with an angle of the inclined surface.

FIG.4

**Description**

TECHNICAL FIELD

The present invention relates to an optical measurement system, an optical measurement method, and a measurement program that make use of digital holography.

BACKGROUND ART

Digital holography has been proposed and put into practical use as a method of highly accurately measuring a shape of a sample.

WO2022/137560 (PTL 1) and WO2022/138716 (PTL 2) disclose an optical measurement apparatus that can realize measurement at higher accuracy with noise being suppressed.

WO2020/045584 (PTL 3) discloses a configuration including a cube-type beam coupler, the configuration readily realizing recording of a large numerical aperture and reflection-type illumination.

CITATION LIST

PATENT LITERATURE

PTL 1:WO2022/137560
PTL 2: WO2022/138716
PTL 3: WO2020/045584

SUMMARY OF INVENTION

TECHNICAL PROBLEM

A sample surface is not necessarily in parallel to a recording surface of an image sensor. There may also be desire for measurement of any surface inside a sample.

One of objects of the present invention is to provide a novel scheme to allow reproduction of an image at a inclined surface set at an inclination with respect to a recording surface of an image sensor.

SOLUTION TO PROBLEM

An optical measurement system according to one aspect of the present invention includes a light source that generates coherent light, a first beam splitter that divides the coherent light from the light source into first light and second light, an image sensor that records a hologram generated by modulation with the second light, of light obtained by illumination of a sample with the first light, and a processing apparatus. The second light is diverging light. The processing apparatus performs calculating a second hologram representing an image at a position distant by a predetermined distance from the image sensor based on a first hologram which is the hologram recorded by the image sensor and calculating, based on the second hologram, a third hologram representing an image at an inclined surface set at an inclination with respect to a recording surface of the image sensor. The processing of calculating the third hologram includes coordinate transformation in accordance with an angle of the inclined surface.

The coordinate transformation in accordance with the angle of the inclined surface may include calculating a first spectrum by Fourier transform of the second hologram, calculating from the first spectrum, a wave number vector of each plane wave included in the second hologram, processing for calculating a wave number vector resulting from rotation of each plane wave, by multiplying the wave number vector of each plane wave by a three-dimensional rotational matrix corresponding to the angle of the inclined surface, and calculating a second spectrum representing the image at the inclined surface, based on the first spectrum and the wave number vector resulting from rotation of each plane wave.

The processing apparatus may provide a user interface screen including an object for receiving a setting of the inclined surface.

The user interface screen may further include an object for receiving a designation of the predetermined distance.

The processing apparatus may further output, based on the third hologram, at least one of a geometrical profile of the inclined surface and a refractive index profile of the inclined surface as a measurement result.

The optical measurement system may further include a second beam splitter configured to modulate with the second light, light obtained by illumination of the sample with the first light, a lens configured to condense the second light, a lens holding cylinder configured to hold the lens, and an inclination member for arrangement of a central axis of the lens holding cylinder at a predetermined inclination with respect to a central optical axis of the second beam splitter.

The optical measurement system may further include a second beam splitter configured to modulate with the second light, light obtained by illumination of the sample with the first light, a first lens configured to condense the first light, the first lens being arranged opposite to the second beam splitter with respect to the sample, a second lens configured to condense the first light, the second lens being arranged at a side the same as the second beam splitter with respect to the sample, and an optical member configured to switch to which of the first lens and the second lens the first light is guided.

According to another aspect of the present invention, an optical measurement method using an optical measurement apparatus is provided. The optical measurement apparatus includes a light source that generates coherent light, a first beam splitter that divides the coherent light from the light source into first light and second light, and an image sensor that records a hologram generated by modulation with the second light, of light obtained by illumination of a sample with the first light. The second light is diverging light. The optical measurement method includes calculating a second hologram representing an image at a position distant by a predetermined distance from the image sensor based on a first hologram which is the hologram recorded by the image sensor and calculating, based on the second hologram, a third hologram representing an image at an inclined surface set at an inclination with respect to a recording surface of the image sensor. The calculating the third hologram includes coordinate transformation in accordance with an angle of the inclined surface.

According to yet another aspect of the present invention, a measurement program executed by a computer connected to an optical measurement apparatus is provided. The optical measurement apparatus includes a light source that generates coherent light, a first beam splitter that divides the coherent light from the light source into first light and second light, and an image sensor that records a hologram generated by modulation with the second light, of light obtained by illumination of a sample with the first light. The second light is diverging light. The measurement program causes the computer to perform calculating a second hologram representing an image at a position distant by a predetermined distance from the image sensor based on a first hologram which is the hologram recorded by the image sensor and calculating, based on the second hologram, a third hologram representing an image at an inclined surface set at an inclination with respect to a recording surface of the image sensor. The calculating the third hologram includes coordinate transformation in accordance with an angle of the inclined surface.

ADVANTAGEOUS EFFECTS OF INVENTION

According to one embodiment of the present invention, an image at an inclined surface set at an inclination with respect to a recording surface of an image sensor can be reproduced.

BRIEF DESCRIPTION OF DRAWINGS

[Fig. 1] A schematic diagram shows an exemplary configuration of an optical measurement system according to the present embodiment.
[Fig. 2] A schematic diagram shows an exemplary configuration of an optical measurement apparatus according to the present embodiment.
[Fig. 3] A schematic diagram shows an exemplary configuration of a processing apparatus according to the present embodiment.
[Fig. 4] A schematic diagram shows an exemplary sample arranged at an inclination with respect to a recording surface of an image sensor.
[Fig. 5] A schematic diagram shows an exemplary user interface screen provided by the processing apparatus according to the present embodiment.
[Fig. 6] A schematic diagram shows another exemplary user interface screen provided by the processing apparatus according to the present embodiment.
[Fig. 7] A schematic diagram shows yet another exemplary user interface screen provided by the processing apparatus according to the present embodiment.
[Fig. 8] A flowchart shows an exemplary processing procedure of sample measurement processing with the use of the optical measurement system according to the present embodiment.
[Fig. 9] A diagram shows exemplary measurement of a sample inclined by 45° in an X-axis direction.
[Fig. 10] A diagram shows exemplary measurement of a sample inclined by 80° in the X-axis direction.
[Fig. 11] A cross-sectional view shows an exemplary configuration for irradiation with an off-axis reference beam in the optical measurement apparatus according to the present embodiment.

[Fig. 12] A perspective view shows the exemplary configuration for irradiation with an off-axis reference beam in the optical measurement apparatus according to the present embodiment.

[Fig. 13] A cross-sectional view shows an exemplary configuration of an inclination member shown in Fig. 12.

[Fig. 14] A diagram shows an exemplary transmission optical system configured with the optical measurement apparatus according to the present embodiment.

[Fig. 15] A diagram shows an exemplary reflection optical system configured with the optical measurement apparatus according to the present embodiment.

DESCRIPTION OF EMBODIMENTS

An embodiment of the present invention will be described in detail with reference to the drawings. The same or corresponding elements in the drawings have the same reference characters allotted and description thereof will not be repeated.

<A. Exemplary Configuration of Optical Measurement System 1>

An exemplary configuration of an optical measurement system 1 according to the present embodiment will initially be described.

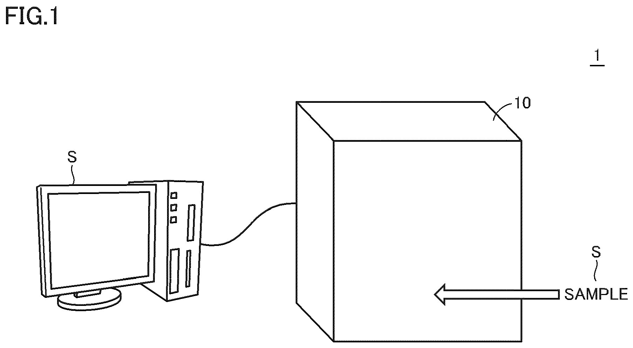

Fig. 1 is a schematic diagram showing an exemplary configuration of optical measurement system 1 according to the present embodiment. Referring to Fig. 1, optical measurement system 1 includes an optical measurement apparatus 10 and a processing apparatus 100.

A sample S is arranged at a predetermined position in optical measurement apparatus 10. An exemplary configuration of a member where sample S is arranged will be described later.

Optical measurement apparatus 10 makes use of digital holography where diverging light is used as a reference beam. For optical measurement apparatus 10, an exemplary configuration based on lensless digital holography where there is no lens between a sample and an image sensor is adopted.

Processing apparatus 100 performs an optical measurement method using optical measurement apparatus 10. Processing apparatus 100 gives an instruction for starting measurement to optical measurement apparatus 10 in response to a user operation or the like and outputs a result of measurement of the sample by processing measurement data from optical measurement apparatus 10.

<B. Exemplary Configuration of Optical Measurement Apparatus 10>

An exemplary configuration of optical measurement apparatus 10 included in optical measurement system 1 according to the present embodiment will now be described.

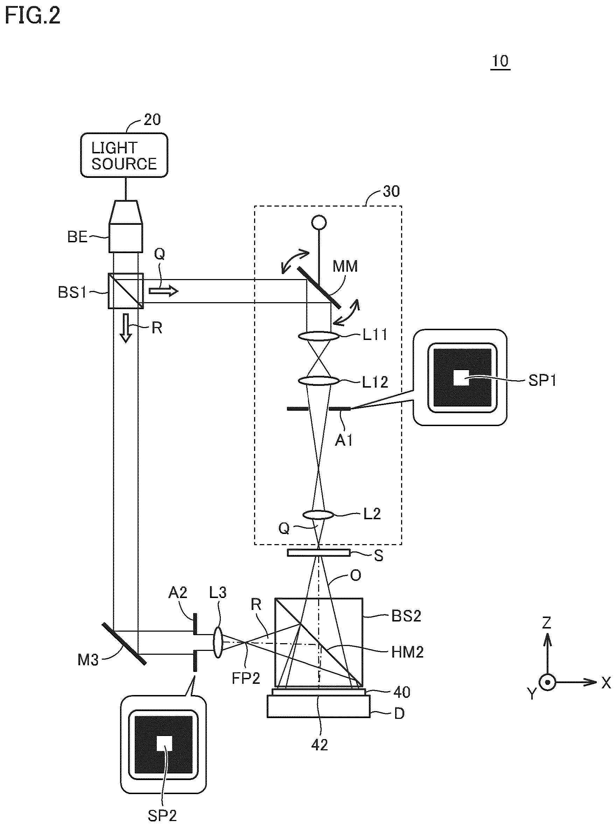

Fig. 2 is a schematic diagram showing an exemplary configuration of optical measurement apparatus 10 according to the present embodiment. Referring to Fig. 2, optical measurement apparatus 10 includes an optical system configured to record a hologram generated by modulation with a reference beam R which is diverging light, of an object beam O obtained by illumination of sample S with illumination light Q. In generation of the hologram, reference beam R is emitted off-axis (offset from the axis). Therefore, reference beam R can also be referred to as an off-axis reference beam. The recorded hologram can also be referred to as an off-axis hologram.

Optical measurement apparatus 10 includes a light source 20, a beam expander BE, and a beam splitter BS1.

Light source 20 is implemented by laser or the like, and generates coherent light. In measurement of a surface geometry of sample S, light source 20 that generates visible light may be employed. Specifically, light source 20 that generates light having a component in at least a part of a wavelength range from 380 to 780 nm may be employed. For example, a visible light source having a peak wavelength at 532 nm may be employed.

In measurement of an internal structure of sample S, light source 20 that generates near infrared rays may be employed. Specifically, light source 20 that generates light having a component in at least a part of a wavelength range from 1000 to 1200 nm may be employed. For example, a near infrared light source having a peak wavelength at 1030 nm may be employed.

A wavelength band of coherent light generated by light source 20 can be designed as appropriate depending on measurement contents or the like.

Beam expander BE expands a cross-sectional diameter of coherent light from light source 20 to a predetermined size. Beam splitter BS1 divides coherent light expanded by beam expander BE into two light beams.

One light beam divided by beam splitter BS1 is used as illumination light Q and the other light beam is used as reference beam R. Beam splitter BS1 (corresponding to a first beam splitter) divides coherent light from light source 20 into illumination light Q (first light) and reference beam R (second light).

One light (illumination light Q) divided by beam splitter BS1 is guided to a measurement optical system 30. The other light (reference beam R) divided by beam splitter BS1 is guided to a lens L3 via a mirror M3 and a mask A2. Lens L3 condenses reference beam R.

Optical measurement apparatus 10 includes a half mirror HM2 on which object beam O obtained by illumination of sample S with illumination light Q from measurement optical system 30 and reference beam R from a lens L3 are incident and an image sensor D arranged in correspondence with half mirror HM2.

Image sensor D records a hologram generated by half mirror HM2. In other words, image sensor D records a hologram generated by modulation with reference beam R, of object beam O obtained by illumination of sample S with illumination light Q. For example, a charge coupled device (CCD) image sensor, a complementary MOS (CMOS) image sensor, or the like can be employed as image sensor D. Image sensor D has light reception sensitivity in accordance with a wavelength component contained in coherent light generated by light source 20.

Measurement optical system 30 adjusts illumination light Q so as to be able to generate a hologram containing less noise. More specifically, measurement optical system 30 includes at least one of a mechanism that changes a manner of illumination with illumination light Q and a mechanism that restricts a range of illumination with illumination light Q.

More specifically, measurement optical system 30 includes a movable mirror MM, lenses L11, L12, and L2, and a mask A1.

Movable mirror MM corresponds to at least a part of the mechanism that changes the manner of illumination with illumination light Q. Relative relation between a reflection surface of movable mirror MM and a direction of incidence of illumination light Q from beam splitter BS1 is variable. In other words, as movable mirror MM rotates, an angle of illumination with illumination light Q is varied. An angle of illumination with illumination light Q will be referred to as an "illumination angle" below.

Illumination light Q is reflected by movable mirror MM and thereafter it passes through lenses L11 and L12. Lens L11 and lens L12 implement an image forming optical system.

Illumination light Q passes through mask A1 in succession to lenses L11 and L12. Mask A1 restricts the range of illumination of sample S with illumination light Q to a predetermined range. In other words, mask A1 corresponds to at least a part of the mechanism that restricts the range of illumination with illumination light Q.

Mask A1 may include an opening pattern SP1. Opening pattern SP1 is a shield member where a window portion corresponding to the predetermined range is formed. Illumination light Q that has passed through opening pattern SP1 is condensed by lens L2 and then an image thereof is formed on sample S. Illumination light Q passes only through the window portion in opening pattern SP1. Therefore, of illumination light Q with which mask A1 is irradiated, light with which sample S is irradiated is restricted to the range corresponding to the window portion in opening pattern SP1. By thus restricting the range of illumination with illumination light Q, unnecessary light can be reduced and accuracy in measurement can be enhanced.

Object beam O (that is, light that has transmitted through sample S) obtained by illumination of sample S with illumination light Q passes through half mirror HM2 of a beam splitter BS2 and is guided to image sensor D.

The range of illumination with illumination light Q may vary depending on a thickness of sample S. When the range of illumination with illumination light Q varies, a position or a shape of opening pattern SP1 may be changed, or a position of lens L2 may be changed.

When movable mirror MM and mask A1 are arranged in optical proximity, lenses L11 and L12 do not have to be provided.

Reference beam R from beam splitter BS1, on the other hand, is reflected by a mirror M3 and thereafter it passes through a mask A2. Mask A2 may include an opening pattern SP2. Opening pattern SP2 is a shield member where a window portion corresponding to the predetermined range is formed. An image of reference beam R that has passed through opening pattern SP2 is condensed by a lens L3. A position where reference beam R is condensed (a focal point FP2) corresponds to a position of a point light source of the off-axis reference beam. In other words, the point light source of the off-axis reference beam can be regarded as being located at focal point FP2. The off-axis reference beam is the reference beam from the point light source located at focal point FP2.

Reference beam R is reflected by half mirror HM2 of beam splitter BS2 in succession to lens L3, and an image thereof is formed at image sensor D.

Beam splitter BS2 (corresponding to a second beam splitter) modulates with reference beam R, object beam O obtained by illumination of sample S with illumination light Q. A size of opening pattern SP2 is determined such that a range beyond a surface of beam splitter BS2 at a side of image sensor D is not illuminated with reference beam R. By appropriately determining the size of opening pattern SP2, production of noise due to unnecessary interference can be suppressed.

<C. Exemplary Configuration of Processing Apparatus 100>

An exemplary configuration of processing apparatus 100 included in optical measurement system 1 according to the present embodiment will now be described.

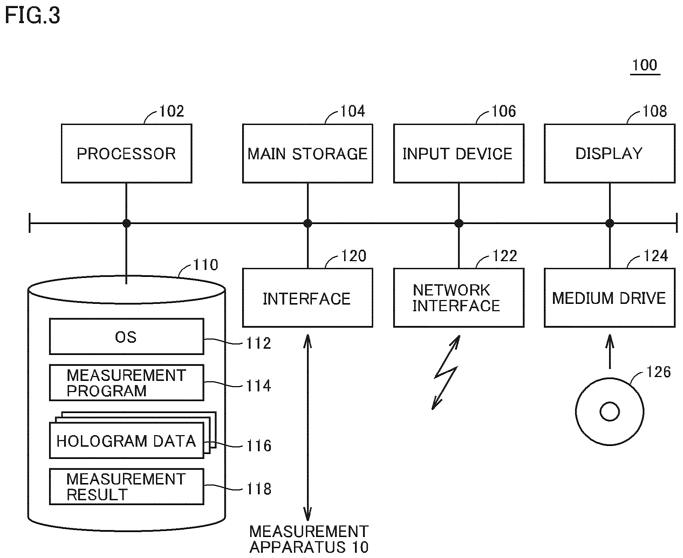

Fig. 3 is a schematic diagram showing an exemplary configuration of processing apparatus 100 according to the present embodiment. Referring to Fig. 3, processing apparatus 100 is an exemplary computer and includes one or more processors 102, a main storage 104, an input device 106, a display 108, an auxiliary storage 110, an interface 120, a network interface 122, and a medium drive 124.

One or more processors 102 include, for example, computing circuitry that performs processing in accordance with computer-readable instructions. One or more processors 102 read one or more programs stored in auxiliary storage 110 on main storage 104 and executes the same. One or more processors 102 may be a multi-core processor or a multiprocessor.

The term "processor" herein encompasses at least a central processing unit (CPU), a graphics processing unit (GPU), an application specific integrated circuit (ASIC), a field programmable gate array (FPGA), and a dynamically reconfigurable processor (DRP).

Main storage 104 is implemented, for example, by a volatile memory such as a dynamic random access memory (DRAM) or a static random access memory (SRAM), and functions as a working memory for execution of a program by one or more processors 102.

Auxiliary storage 110 is implemented, for example, by a non-volatile memory such as a hard disk or a flash memory, and various programs and data are stored therein. For example, an operating system (OS) 112, a measurement program 114, hologram data 116, and a measurement result 118 are stored in auxiliary storage 110.

The term "memory" herein encompasses at least main storage 104 and auxiliary storage 110.

Operating system 112 provides an environment where one or more processors 102 execute a program. Measurement program 114 implements an optical measurement method or the like according to the present embodiment by being executed by one or more processors 102. By being executed by processing apparatus 100 which is an exemplary computer, measurement program 114 causes processing apparatus 100 to perform the optical measurement method using optical measurement apparatus 10.

Hologram data 116 corresponds to image data outputted from image sensor D. Measurement result 118 includes a measurement result obtained by execution of measurement program 114.

Input device 106 includes a keyboard, a mouse, and the like and receives an operation from a user.

Display 108 provides output of a result or the like of execution of a program by one or more processors 102 to a user. A user interface screen as will be described later is shown on display 108.

Interface 120 mediates data transmission between processing apparatus 100 and optical measurement apparatus 10.

Network interface 122 mediates data transmission between processing apparatus 100 and an external server apparatus.

Medium drive 124 reads necessary data from a recording medium 126 (for example, an optical disc) where a program or the like to be executed by one or more processors 102 is stored and has the data stored in auxiliary storage 110. Measurement program 114 or the like executed in processing apparatus 100 may be installed through recording medium 126 or the like or downloaded from a server apparatus through network interface 122 or the like.

Measurement program 114 may use a necessary module by calling the same at predetermined timing out of program modules provided as a part of operating system 112. Therefore, even measurement program 114 not including some of the modules necessary for processing in the present invention is also encompassed in the technical scope of the present invention. Measurement program 114 may be provided as being incorporated as a part of another program.

<D. Exemplary Measurement Processing>

Exemplary processing for measuring sample S with the use of optical measurement system 1 according to the present embodiment will now be described.

Referring again to Fig. 2, a light reception surface of image sensor D is referred to as a recording surface 40 and an intersection between recording surface 40 and a central optical axis of beam splitter BS2 is referred to as an origin 42. The central optical axis of beam splitter BS2 is defined as a Z axis and two axes orthogonal to the Z axis are defined as an X axis and a Y axis. The central optical axis of beam splitter BS2 is perpendicular to recording surface 40. The X axis and the Y axis are in parallel to recording surface 40.

In optical measurement system 1, an optical wave distribution at a surface (which will also be referred to as a "sample surface" below) distant by a distance d from recording surface 40 in a Z-axis direction can be reproduced. A hologram including information necessary for reproduction of the optical wave distribution at the sample surface is referred to as a reproduction object beam hologram $U_\Sigma$.

Processing apparatus 100 performs processing for calculating a hologram $U_d(x, y)$ (corresponding to a second hologram) representing an image at a position distant by predetermined distance d from image sensor D, based on reproduction object beam hologram $U_\Sigma(x, y)$ (or an object beam hologram $U(x, y)$) (corresponding to a first hologram) recorded by image sensor D.

More specifically, the optical wave distribution at any sample surface can be reproduced by diffraction calculation by plane wave expansion, of reproduction object beam hologram $U_\Sigma$ (x, y). For example, in measurement of a surface geometry of sample S, the sample surface (that is, distance d) is set around the surface of sample S. In measurement of an internal structure of sample S, the sample surface (that is, distance d) is set at a position corresponding to the inside of sample S.

A result of propagation of reproduction object beam hologram $U_\Sigma$ (x, y) by distance d by plane wave expansion is defined as a hologram $U_d$ (x, y). Hologram $U_d$ (x, y) represents an image (the optical wave distribution of object beam O) at the sample surface distant by distance d from recording surface 40 in the Z-axis direction.

It is assumed that M media are present in a range from recording surface 40 to the sample surface. In an example where a plurality of media are present, a boundary surface between media is assumed to be in parallel to recording surface 40.

Hologram $U_d$ can be generalized as in an expression (1), where $d_m$ (m = 1, 2, ..., M) represents a distance (thickness) of each medium in the Z-axis direction and $n_m$ (m = 1, 2, ..., M) represents a refractive index.

[Math. 1]

$$\left. \begin{array}{c} U_d(x,y) = F^{-1}\left[ F[U_\Sigma(x,y)] \prod_{m=1}^{M} T_{m,m+1}\left(k_x, k_y\right) \exp(ik_{zm}d_m) \right] \\[4mm] k_{zm} = \sqrt{\left(\dfrac{2\pi n_m}{\lambda}\right)^2 - k_x^2 - k_y^2} \end{array} \right\} \quad \cdots (1)$$

In the expression (1), F means Fourier transform and $F^{-1}$ means inverse Fourier transform. $k_x$ and $k_y$ each represent a wave number. $T_{m,m+1}$ ($k_x$, $k_y$) represents a transmission coefficient upon incidence from an mth medium on an (m+1)th medium. It is assumed that relation of $T_{M,M+1}$ ($k_x$, $k_y$) = 1 is satisfied. When the transmission coefficient upon incidence from the mth medium on the (m+1)th medium can be regarded as being substantially uniform without being dependent on wave numbers $k_x$ and $k_y$, calculation may be simplified on the assumption that relation of $T_{m,m+1}$ ($k_x$, $k_y$) ≡ 1 is satisfied.

For example, in an example where reproduction object beam hologram $U_\Sigma$ (x, y) propagates by distance d only through the air, the number of media is M = 1, the distance is $d_1$ = d, and the refractive index is $n_m$ = 1.

When object beam hologram U (x, y) (the hologram recorded by image sensor D) generated by modulation of object beam O with reference beam R satisfies the sampling theorem, object beam hologram U can be used as it is as reproduction object beam hologram $U_\Sigma$ (x, y).

In an example where object beam hologram U contains a frequency component that does not satisfy the sampling theorem, the number of pixels of an image outputted by image sensor D may be increased by interpolation. Alternatively, a pixel pitch of image sensor D may be made finer by applying the division and superimposition step disclosed in WO2020/045584 (PTL 3).

Optical measurement system 1 according to the present embodiment can also measure sample S arranged as being inclined with respect to recording surface 40 of image sensor D.

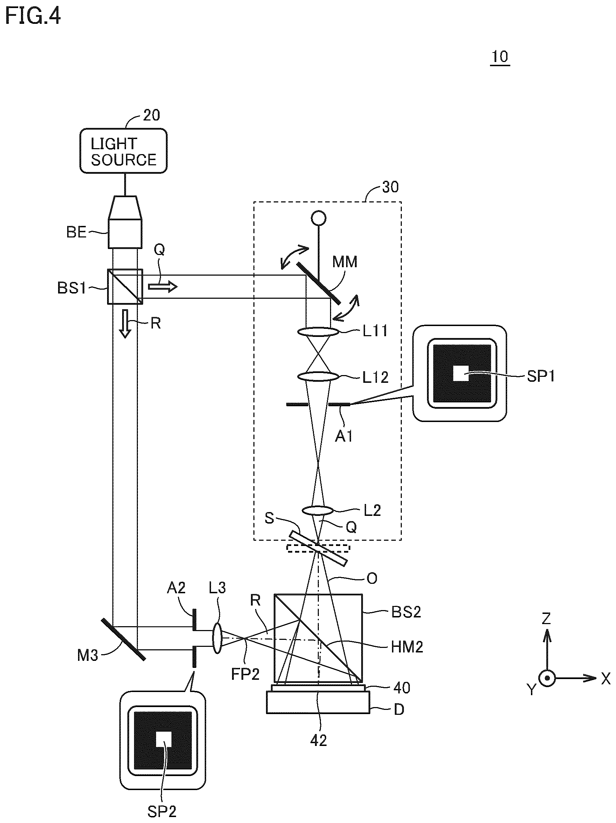

Fig. 4 is a schematic diagram showing exemplary sample S arranged at an inclination with respect to recording surface 40 of image sensor D. As shown in Fig. 4, optical measurement system 1 can measure sample S even when the surface of sample S does not face recording surface 40.

Processing for reproducing an image at a surface (which will be referred to below as an "inclined surface" as compared to the "sample surface" described above) which is not in parallel to recording surface 40 of image sensor D will be described.

Processing apparatus 100 performs processing for calculating, based on hologram $U_d$ (x, y) (corresponding to the second hologram), a hologram $U_T$ (x, y) (corresponding to a third hologram) representing an image at an inclined surface set at an inclination with respect to recording surface 40 of image sensor D. As will be described later, the processing for calculating hologram $U_T$ (x, y) includes coordinate transformation in accordance with an angle of the inclined surface.

Calculation of the image at the inclined surface includes calculation of hologram $U_d$, extraction of each component of a plane wave included in hologram $U_d$, and processing for rotating each component of the plane wave by the angle of the inclined surface.

As described above, by diffraction calculation in accordance with the expression (1), hologram $U_d$ (x, y) at distance d from origin 42 of recording surface 40 to the sample surface along the Z-axis direction is calculated. Coordinate transformation in accordance with the angle of the inclined surface by using hologram $U_d$ (x, y) as will be described in detail below is then performed.

Initially, a spectrum F [$U_d$] (u, v) (corresponding to a first spectrum) is calculated by Fourier transform of calculated hologram $U_d$ (x, y).

Spectrum F [$U_d$] (u, v) represents a group of plane waves that propagate in various directions included in hologram $U_d$ (x, y). A wave number vector k = ($k_x$, $k_y$, $k_z$) of each plane wave is determined in accordance with an expression (2), based on a coordinate u, v of spectrum F [$U_d$] and a wavelength $\lambda$ of the light source.

[Math. 2]

$$\left.\begin{array}{l} k_x = 2\pi u \\ k_y = 2\pi v \\ k_z = \sqrt{\left(\dfrac{2\pi}{\lambda}\right)^2 - k_x^2 - k_y^2} \end{array}\right\} \quad \cdots(2)$$

Wave number vector k of each plane wave included in hologram $U_d$ (x, y) is thus calculated from spectrum F [$U_d$] (u, v).

In succession, processing for rotationally moving each plane wave included in spectrum F [$U_d$] (u, v) in accordance with the angle of the inclined surface is performed. More specifically, wave number vector k of the plane wave is transformed with a three-dimensional rotational matrix $T_R$ corresponding to the angle of the inclined surface. With wave number vector k' = ($k'_x$, $k'_y$, $k'_z$) resulting from rotation of each plane wave, calculation in accordance with an expression (3) is performed.

[Math. 3]

$$\begin{bmatrix} k'_x \\ k'_y \\ k'_z \end{bmatrix} = T_R \begin{bmatrix} k_x \\ k_y \\ k_z \end{bmatrix} \quad \cdots(3)$$

Processing for calculating wave number vector k' resulting from rotation of each plane wave is thus performed by multiplying wave number vector k of each plane wave by three-dimensional rotational matrix $T_R$ corresponding to the angle of the inclined surface. Three-dimensional rotational matrix $T_R$ can be determined, for example, in accordance with the Rodrigues' rotation formula.

As a result of rotation of wave number vector k, the coordinate (u, v) of spectrum F [$U_d$] corresponding to each component of the plane wave moves to a coordinate ($k'_x/2\pi$, $k'_y/2\pi$). By performing such coordinate transformation on all plane waves (all coordinates included in spectrum F [$U_d$] (u, v)), a new spectrum F [$U_T$] (u, v) representing an image at the inclined surface, rather than the sample surface, is calculated.

Processing for calculating spectrum F [$U_d$] (u, v) (corresponding to a second spectrum) representing an image at the inclined surface is thus performed based on spectrum F [$U_T$] (u, v) and wave number vector k' resulting from rotation of each plane wave.

Finally, an image $U_T$ at the inclined surface is reproduced by inverse Fourier transform of calculated new spectrum F [$U_T$].

Three-dimensional rotational matrix $T_R$ in the expression (3) may be determined in response to user input through a user interface as will be described below.

<E. Exemplary User Interface Screen>

An exemplary user interface screen for receiving a designation of reproduction of an image will now be described.

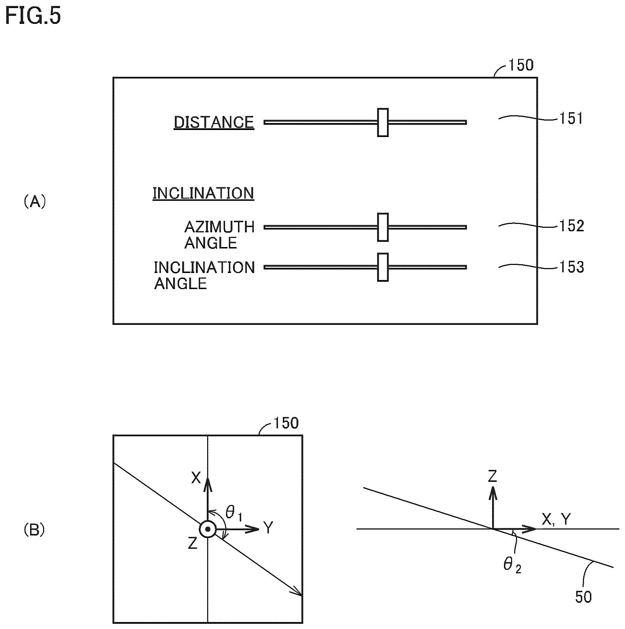

Fig. 5 is a schematic diagram showing an exemplary user interface screen provided by processing apparatus 100 according to the present embodiment.

Referring to Fig. 5 (A), a user interface screen 150 includes an operation object 151 that receives a designation of distance d from recording surface 40 to the sample surface (inclined surface) and operation objects 152 and 153 that receive a designation of the angle of inclination (inclined surface) with respect to the sample surface. Operation object 152 receives a designation of an azimuth angle. Operation object 153 receives a designation of an inclination angle.

Referring to Fig. 5 (B), an azimuth angle $\theta_1$ determined in response to a user operation on operation object 152 indicates an azimuth at which a sample surface 50 is inclined. An inclination angle $\theta_2$ determined in response to a user operation on operation object 153 indicates an inclination of sample surface 50 with respect to a surface in parallel to recording surface 40.

A unit vector $(N_x, N_y, N_z)$ indicating any rotation axis is introduced. The unit vector $(N_x, N_y, N_z)$ may match with a coordinate system that defines wave number vector k, or may be based on any coordinate system defined in the user interface screen.

Three-dimensional rotational matrix $T_R$ is expressed as in an expression (4), with the unit vector (Nx, Ny, Nz) and azimuth angle $\theta_1$ and inclination angle $\theta_2$ shown in Fig. 5 (B).

[Math. 4]

$$T_R = \begin{bmatrix} N_x^2(1 - \cos\theta_2) + \cos\theta_2 & N_xN_y(1 - \cos\theta_2) - N_z\sin\theta_2 & N_xN_z(1 - \cos\theta_2) + N_y\sin\theta_2 \\ N_xN_y(1 - \cos\theta_2) + N_z\sin\theta_2 & N_y^2(1 - \cos\theta_2) + \cos\theta_2 & N_yN_z(1 - \cos\theta_2) - N_x\sin\theta_2 \\ N_xN_z(1 - \cos\theta_2) - N_y\sin\theta_2 & N_yN_z(1 - \cos\theta_2) + N_x\sin\theta_2 & N_z^2(1 - \cos\theta_2) + \cos\theta_2 \end{bmatrix} \quad \cdots(4)$$

When the unit vector $(N_x, N_y, N_z)$ matches with the coordinate system that defines wave number vector k, the rotation axis is located on an XY plane. Therefore, rotation in accordance with the designation of the azimuth angle and the inclination angle can be regarded as $N_z = 0$. Consequently, the expression (4) can be simplified like an expression (5).

[Math. 5]

$$T_R = \begin{bmatrix} N_x^2(1 - \cos\theta_2) + \cos\theta_2 & N_xN_y(1 - \cos\theta_2) & N_y\sin\theta_2 \\ N_xN_y(1 - \cos\theta_2) & N_y^2(1 - \cos\theta_2) + \cos\theta_2 & -N_x\sin\theta_2 \\ -N_y\sin\theta_2 & N_x\sin\theta_2 & \cos\theta_2 \end{bmatrix} \quad \cdots(5)$$

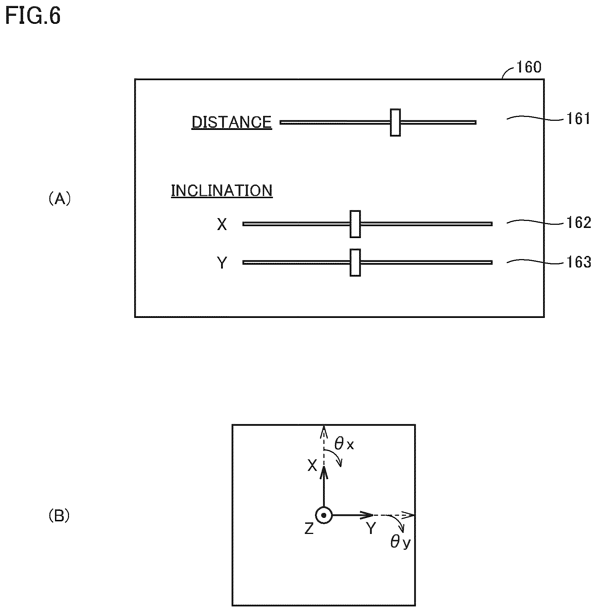

Fig. 6 is a schematic diagram showing another exemplary user interface screen provided by processing apparatus 100 according to the present embodiment.

Referring to Fig. 6 (A), a user interface screen 160 includes an operation object 161 that receives a designation of distance d from recording surface 40 to the sample surface (inclined surface), an operation object 162 that receives a designation of the inclination angle (an angle of rotation around the Y axis) in an X-axis direction of the sample surface, and an operation object 163 that receives a designation of the inclination angle (an angle of rotation around the X axis) in a Y-axis direction of the sample surface.

Referring to Fig. 6 (B), an inclination angle $\theta_x$ determined in response to a user operation on operation object 162 indicates the angle of inclination of sample surface 50 in the X-axis direction. An inclination angle $\theta_y$ determined in response to a user operation on operation object 163 indicates the angle of inclination of sample surface 50 in the Y-axis direction. A vector r indicating a direction of inclination is expressed as in an expression (6).

[Math. 6]

$$r = (r_x, r_y, r_z) = \left( \cos\theta_x, \cos\theta_y, \sqrt{1 - \cos^2\theta_x - \cos^2\theta_y} \right) \quad \cdots(6)$$

With vector r, azimuth angle $\theta_1$ and inclination angle $\theta_2$ are calculated in accordance with an expression (7). In the expression (7), arg represents a function that obtains an angle of deviation of a complex number.

[Math. 7]

$$\theta_1 = \arg(r_x + ir_y)$$
$$\theta_2 = \tan^{-1}\left( \frac{r_z}{\sqrt{r_x^2 + r_y^2}} \right) \quad \cdots(7)$$

By giving azimuth angle $\theta_1$ and inclination angle $\theta_2$ calculated in accordance with the expression (7) to the expression (4) or (5) described above, three-dimensional rotational matrix $T_R$ is calculated.

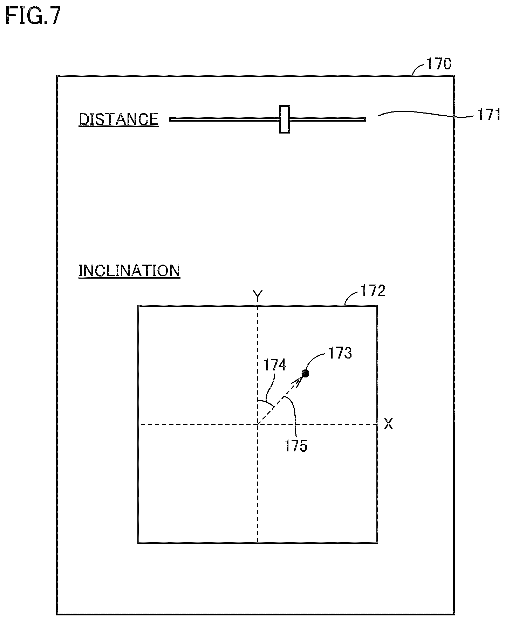

Fig. 7 is a schematic diagram showing yet another exemplary user interface screen provided by processing apparatus 100 according to the present embodiment. Referring to Fig. 7, a user interface screen 170 includes an operation object 171 that receives a designation of distance d from recording surface 40 to the sample surface (inclined surface) and a two-dimensional map 172.

In two-dimensional map 172, a point 173 on a two-dimensional coordinate indicates a direction (azimuth angle) of inclination and an angle (inclination angle) of inclination of sample surface 50. The origin of two-dimensional map 172 means that both of the azimuth angle and the inclination angle are zero. A coordinate azimuth of point 173 in two-dimensional map 172 indicates an azimuth angle 174 (azimuth angle $\theta_1$) and a distance 175 from the origin indicates inclination angle $\theta_2$.

The user can more intuitively designate the azimuth angle and the inclination angle, although a display area for showing two-dimensional map 172 is necessary. Three-dimensional rotational matrix $T_R$ in accordance with the designated azimuth angle and inclination angle is similar to that in the expression (4) described above.

Furthermore, the angle (the azimuth angle and the inclination angle) of the sample surface (inclined surface) may automatically be detected. In this case, optimal values of the azimuth angle and the inclination angle (and the distance) are determined, for example, based on a degree of focus of the reproduced image.

As shown in Figs. 5 to 7, processing apparatus 100 provides user interface screens 150, 160, and 170 including the object (operation objects 152 and 153 in Fig. 5, operation objects 162 and 163 in Fig. 6, and two-dimensional map 172 in Fig. 7) for receiving a setting of the inclined surface.

As shown in Figs. 5 to 7, user interface screens 150, 160, and 170 may include the object (operation object 151 in Fig. 5, operation object 161 in Fig. 6, and operation object 171 in Fig. 7) for receiving a designation of predetermined distance d.

<F. Processing Procedure of Measurement Processing>

An exemplary processing procedure of processing for measuring sample S with the use of optical measurement system 1 according to the present embodiment will now be described.

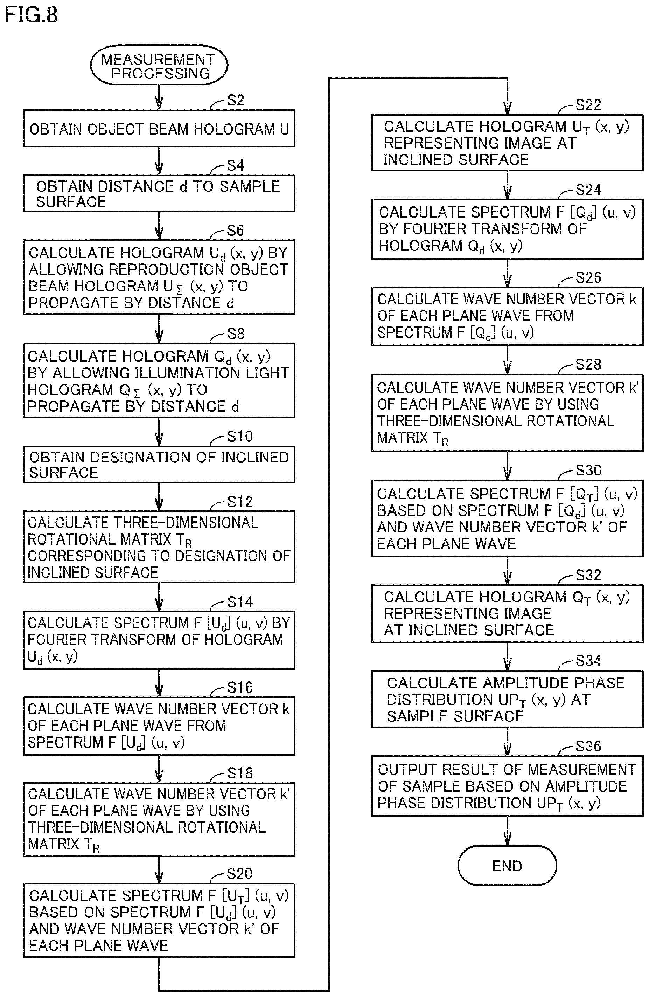

Fig. 8 is a flowchart showing an exemplary processing procedure of processing for measuring sample S with the use of optical measurement system 1 according to the present embodiment. Processing shown in Fig. 8 may be performed by execution of measurement program 114 by one or more processors of processing apparatus 100.

In processing apparatus 100, an illumination light hologram $Q_\Sigma$ (x, y) resulting from recording with image sensor D, of a hologram generated by generation of coherent light from light source 20 while sample S is not arranged is stored in advance.

Referring to Fig. 8, processing apparatus 100 obtains object beam hologram U (x, y) resulting from recording with image sensor D, of a hologram generated by generation of coherent light from light source 20 while sample S is arranged at a predetermined position (step S2). For the sake of brevity of description, it is assumed that obtained object beam hologram U (x, y) is handled as it is as reproduction object beam hologram $U_\Sigma$ (x, y).

Processing apparatus 100 obtains distance d to the sample surface designated by the user (step S4). For example, the user designates distance d in the user interface screen shown in Figs. 5 to 7 described above.

Processing apparatus 100 calculates hologram $U_d$ (x, y) by allowing reproduction object beam hologram $U_\Sigma$ (x, y) to propagate by distance d by plane wave expansion (step S6). Plane wave expansion is performed in accordance with the expression (1) described above.

Similarly, processing apparatus 100 calculates hologram $Q_d$ (x, y) by allowing illumination light hologram $Q_\Sigma$ (x, y) to propagate by distance d by plane wave expansion (step S8). Plane wave expansion is performed in accordance with the expression (1) described above.

Processing apparatus 100 obtains a designation of the inclined surface designated by the user (step S10) and calculates three-dimensional rotational matrix $T_R$ corresponding to the obtained designation of the inclined surface (step S12). For example, the user designates the inclined surface (the azimuth angle, the inclination angle, and the like) in the user interface screen shown in Figs. 5 to 7 described above.

Processing apparatus 100 calculates spectrum F $[U_d]$ (u, v) by Fourier transform of hologram $U_d$ (x, y) calculated in step S6 (step S14). Processing apparatus 100 calculates wave number vector k of each plane wave from spectrum F $[U_d]$ (u, v) (step S16). Processing apparatus 100 calculates wave number vector k' of each plane wave resulting from rotation of wave number vector k of each plane wave in accordance with the inclined surface, by using three-dimensional rotational matrix $T_R$ calculated in step S12 (step S18) Processing apparatus 100 calculates spectrum F $[U_T]$ (u, v) representing the image (object beam O) at the inclined surface, based on spectrum F $[U_d]$ (u, v) and wave number vector k' of each plane wave (step S20). Processing apparatus 100 calculates hologram $U_T$ (x, y) representing the image at the inclined surface by inverse Fourier transform of spectrum F $[U_T]$ (u, v) (step S22).

Similarly, processing apparatus 100 calculates spectrum F $[Q_d]$ (u, v) by Fourier transform of hologram $Q_d$ (x, y) calculated in step S8 (step S24). Processing apparatus 100 calculates wave number vector k of each plane wave from spectrum F $[Q_d]$ (u, v) (step S26). Processing apparatus 100 calculates wave number vector k' of each plane wave resulting from rotation of wave number vector k of each plane wave in accordance with the inclined surface, by using three-dimensional rotational matrix $T_R$ calculated in step S12 (step S28). Processing apparatus 100 calculates spectrum F $[Q_T]$ (u, v) representing the image resulting from illumination light Q at the inclined surface, based on spectrum F $[Q_d]$ (u, v) and wave number vector k' of each plane wave (step S30). Processing apparatus 100 calculates hologram $Q_T$ (x, y) representing the image at the inclined surface by inverse Fourier transform of spectrum F $[Q_T]$ (u, v) (step S32).

In succession, processing apparatus 100 calculates an amplitude phase distribution $UP_T$ (x, y) at the sample surface by dividing hologram $U_T$ (x, y) by hologram $Q_T$ (x, y) (step S34).

Processing apparatus 100 outputs a result of measurement of sample S based on amplitude phase distribution $UP_T$ (x, y) (step S36).

The measurement result may be a geometrical profile of the sample surface (or the inclined surface) which is, for example, an assembly of thicknesses at coordinates calculated from a phase shift $\Delta\theta$ (x, y) of amplitude phase distribution $UP_T$ (x, y). The measurement result may be a refractive index profile of the sample surface (or the inclined surface). The measurement result may be an intensity distribution or a phase distribution of the sample surface (or the inclined surface).

Processing apparatus 100 may thus output, as the measurement result, at least one of the geometrical profile and the refractive index profile at the sample surface (inclined surface) based on hologram $U_T$ (x, y).

Processing apparatus 100 may repeat processing in steps S2 to S36 in predetermined cycles or may perform again the processing in steps S2 to S36 when a designation of distance d or the inclined surface by the user is changed. When a designation of the inclined surface by the user is changed, processing apparatus 100 may perform again processing in steps S10 to S36.

In an example where the manner of illumination with illumination light Q is changed by using movable mirror MM, a plurality of object beam holograms $U_i$ (x, y) may be obtained with the manner of illumination with illumination light Q being varied. In this case, a combined amplitude phase distribution $UP_{TSA}$ (x, y) is calculated by integrating an amplitude phase distribution $UP_{Ti}$ (x, y) calculated for each of the plurality of object beam holograms $U_i$ (x, y), the amplitude phase distribution remaining as a complex number. The result of measurement of sample S is outputted based on combined amplitude phase distribution $UP_{TSA}$ (x, y).

Processing in steps S14 to S22 and processing in steps S24 to S32 described above may be performed in any order. In other words, any of processing for calculating hologram $U_T$ (x, y) and processing for calculating hologram $Q_T$ (x, y) may be performed first, or they may be performed in parallel.

<G. Exemplary Measurement>

Exemplary measurement by optical measurement system 1 according to the present embodiment, of sample S arranged at an inclination with respect to recording surface 40 will now be described.

Image reproduction in an example where the inclination angle is relatively small will initially be exemplified.

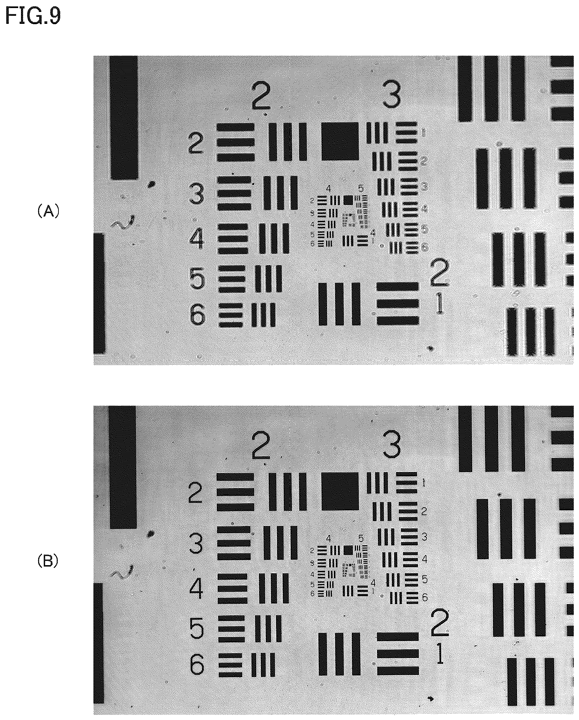

Fig. 9 is a diagram showing exemplary measurement of sample S inclined by 45° in the X-axis direction. Fig. 9 (A) shows an exemplary image reproduced without coordinate transformation described above and Fig. 9 (B) shows an exemplary image reproduced after coordinate transformation described above.

Referring to Fig. 9 (A), it can be seen that, in the image reproduced without coordinate transformation, a good focused state is obtained around the center in a lateral direction whereas a less focused state is observed toward opposing sides in the lateral direction.

In contrast, referring to Fig. 9 (B), in the image reproduced after coordinate transformation, the good focused state is realized over the entire surface.

As a result of coordinate transformation according to the present embodiment, the image at the sample surface (inclined surface) that is not in parallel to recording surface 40 can thus highly accurately be reproduced.

Image reproduction in an example where the inclination angle is large will now be exemplified.

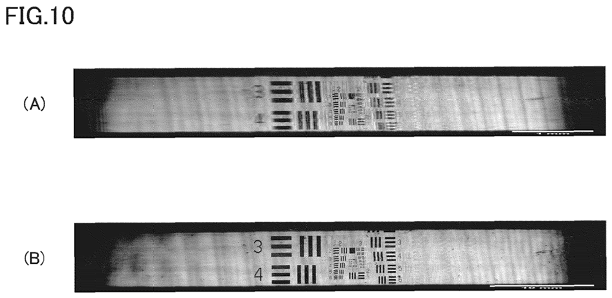

Fig. 10 is a diagram showing exemplary measurement of sample S inclined by 80° in the X-axis direction. Fig. 10 (A) shows an exemplary image reproduced without coordinate transformation described above and Fig. 10 (B) shows an exemplary image reproduced after coordinate transformation described above.

Referring to Fig. 10 (A), it can be seen that, in the image reproduced without coordinate transformation, the good focused state is obtained in a very small area around the center in the lateral direction whereas other areas are in an unfocused state.

In contrast, referring to Fig. 10 (B), in the image reproduced after coordinate transformation, the good focused state is realized over the entire surface.

As a result of coordinate transformation according to the present embodiment, the image at the sample surface (inclined surface) that is not in parallel to recording surface 40 can thus highly accurately be reproduced.

<H. Off-Axis Reference Beam>

An exemplary configuration for irradiation with the off-axis reference beam in optical measurement apparatus 10 will now be described.

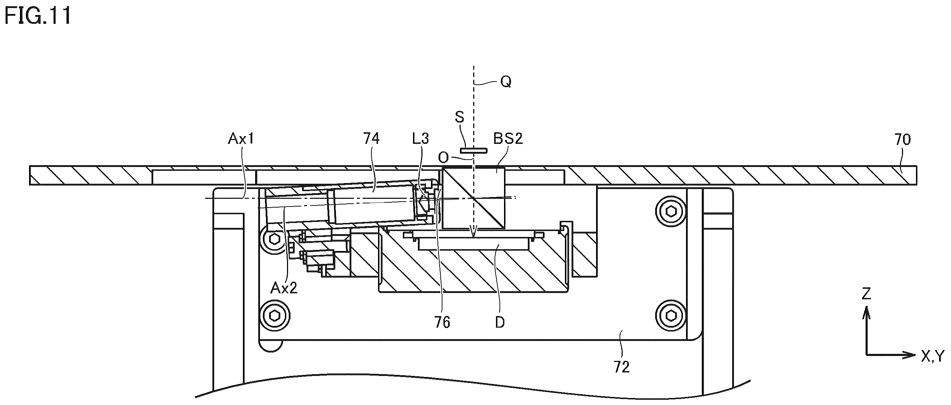

Fig. 11 is a cross-sectional view showing an exemplary configuration for irradiation with the off-axis reference beam in optical measurement apparatus 10 according to the present embodiment. Fig. 11 shows a cross-sectional structure with beam splitter BS2 being centered.

Referring to Fig. 11, optical measurement apparatus 10 includes a base 70 and beam splitter BS2 arranged in an opening provided in base 70. Sample S is arranged at a position distant from beam splitter BS2 toward an upper side on the sheet plane. The object beam obtained by illumination of sample S with illumination light Q from the upper side on the sheet plane is incident on beam splitter BS2. A lens holding cylinder 74 and image sensor D are positioned at predetermined positions by a holding member 72.

Lens holding cylinder 74 holds lens L3. Lens L3 is arranged inside lens holding cylinder 74. Reference beam R from a left side on the sheet plane is condensed by lens L3 arranged inside lens holding cylinder 74 and then incident on beam splitter BS2.

Lens holding cylinder 74 is arranged at a non-zero angle with respect to an axial direction of beam splitter BS2. Reference beam R is thus emitted off-axis (as being displaced from the axis).

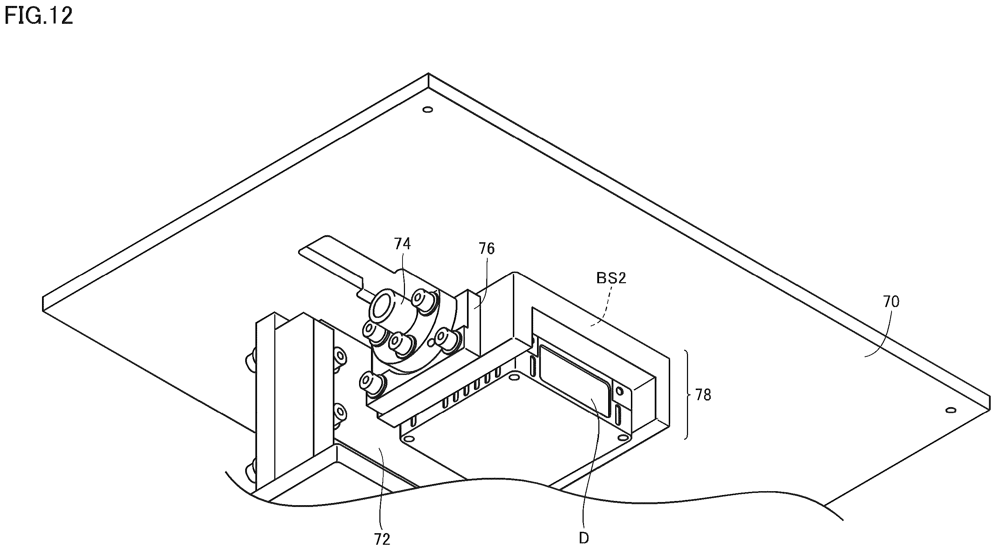

Fig. 12 is a perspective view showing the exemplary configuration for irradiation with the off-axis reference beam in optical measurement apparatus 10 according to the present embodiment. Fig. 12 shows the perspective view when viewed from a side of image sensor D.

Referring to Fig. 12, a recording unit 78 which is beam splitter BS2 and image sensor D as being integrated is arranged at a side opposite to a side of base 70 where sample S is arranged. At a side surface of recording unit 78, lens holding cylinder 74 is arranged with an inclination member 76 being interposed.

Inclination member 76 is arranged between the side surface of image sensor D and an end surface of lens holding cylinder 74. A surface of inclination member 76 in contact with the side surface of image sensor D and a surface of inclination member 76 in contact with the end surface of lens holding cylinder 74 are not in parallel, but a predetermined inclination is provided.

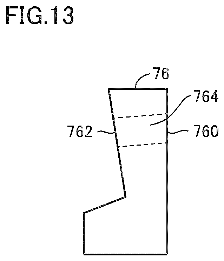

Fig. 13 is a cross-sectional view showing an exemplary configuration of inclination member 76 shown in Fig. 12. The cross-sectional view shown in Fig. 13 is drawn to facilitate understanding of a structural characteristic, and it does not necessarily show an actual size.

Referring to Figs. 11 and 13, inclination member 76 includes a surface 760 in contact with image sensor D and a surface 762 in contact with the end surface of lens holding cylinder 74. Surface 762 is formed as being inclined with respect to surface 760. The inclination of surface 762 with respect to surface 760 is determined by an angle of off-axis irradiation with reference beam R. Inclination member 76 is provided with an opening 764 through which reference beam R passes.

In inclination member 76, a central axis Ax2 of lens holding cylinder 74 is arranged at a predetermined inclination with respect to a central optical axis Ax1 of beam splitter BS2. By connecting image sensor D and lens holding cylinder 74 to each other by inclination member 76, the off-axis reference beam can readily and highly accurately be realized.

<I. Configuration Where Switching Between Transmission Optical System and Reflection Optical System Can Be Made>

An exemplary configuration where switching between a transmission optical system and a reflection optical system can freely be made will now be described.

Depending on a material or the like of sample S, measurement with a reflection optical system rather than a transmission optical system as shown in Fig. 2 may be preferable. In the transmission optical system, object beam O is generated as illumination light Q transmits through sample S. In the reflection optical system, object beam O is generated as illumination light Q is reflected by sample S.

In optical measurement apparatus 10 in optical measurement system 1 according to the present embodiment, a configuration where switching between the transmission optical system and the reflection optical system can freely be made may be adopted. An exemplary configuration where switching between the transmission optical system and the reflection optical system can freely be made will be described below.

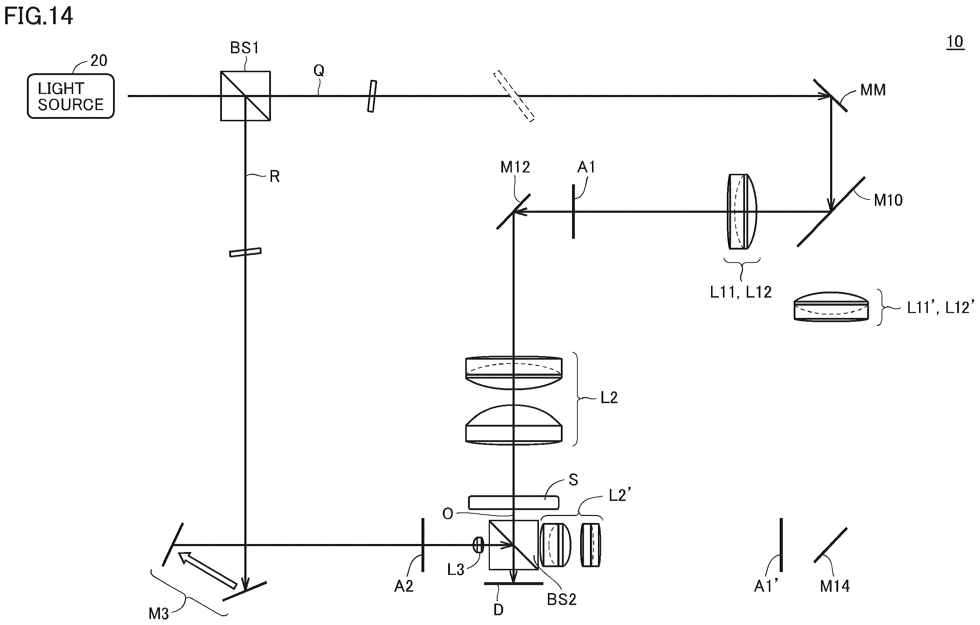

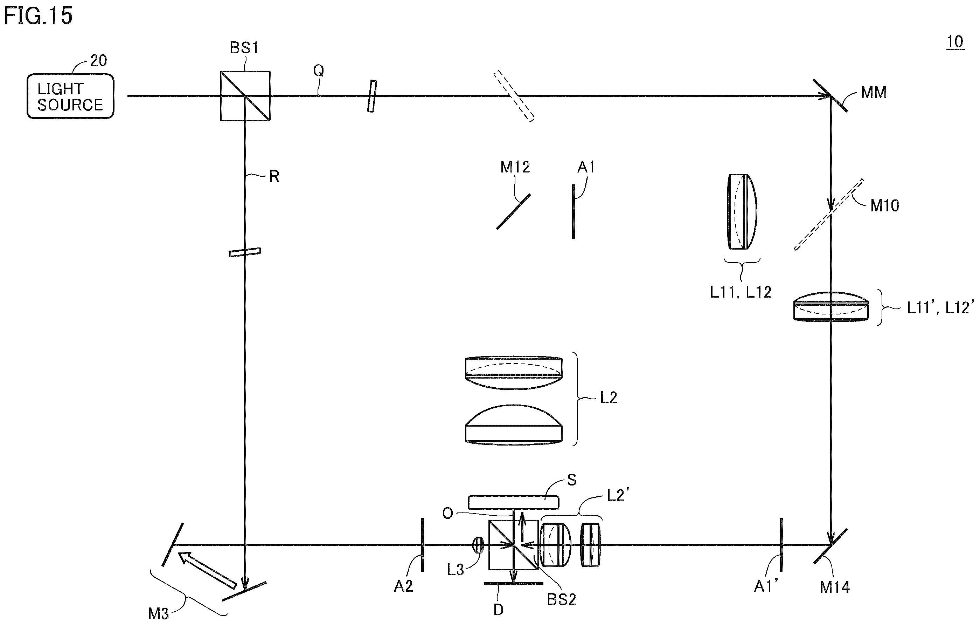

Fig. 14 is a diagram showing an exemplary transmission optical system configured with optical measurement apparatus 10 according to the present embodiment. Fig. 15 is a diagram showing an exemplary reflection optical system configured with optical measurement apparatus 10 according to the present embodiment.

Referring to Figs. 14 and 15, optical measurement apparatus 10 includes a removable mirror M10. When mirror M10 is arranged at a predetermined position, the transmission optical system as shown in Fig. 14 is configured. As mirror M10 is removed, the reflection optical system as shown in Fig. 15 is configured.

In the transmission optical system shown in Fig. 14, illumination light Q from beam splitter BS1 is reflected by movable mirror MM and mirror M10 and passes through lenses L11 and L12. Illumination light Q passes through mask A1 in succession to lenses L11 and L12, and thereafter it is reflected by a mirror M12. After illumination light Q is reflected by mirror M12, it is condensed by lens L2 and an image is formed on sample S. As illumination light Q transmits through sample S, it becomes object beam O and object beam O forms an image on image sensor D.

Lens L2 is arranged opposite to beam splitter BS2 with respect to sample S. Since lens L2 condenses illumination light Q, object beam O resulting from transmission of illumination light Q through sample S is incident on beam splitter BS2.

In the reflection optical system shown in Fig. 15, when illumination light Q from beam splitter BS1 is reflected by movable mirror MM, it is incident on lenses L11' and L12' because removable mirror M10 is removed. Illumination light Q is reflected by a mirror M14 in succession to lenses L11' and L12', and thereafter it passes through a mask A1'. After illumination light Q passes through mask A1', it is condensed by a lens L2' and incident on beam splitter BS2. Illumination light Q is reflected toward sample S by beam splitter BS2 and an image is formed on sample S. As illumination light Q is reflected by sample S, it becomes object beam O and object beam O forms an image at image sensor D.

Lens L2' is arranged at a side the same as beam splitter BS2 with respect to sample S. Since lens L2' condenses illumination light Q, object beam O resulting from reflection of illumination light Q by sample S is incident on beam splitter BS2.

Mirror M10 corresponds to an optical member configured to switch to which of lens L2 and lens L2' it should guide illumination light Q. Instead of mirror M10, for example, an optical element capable of switching between reflection and transmission in accordance with an external signal may be employed.

Referring to Figs. 14 and 15, reference beam R from beam splitter BS1 is reflected by mirror M3 and thereafter it passes through mask A2. After reference beam R passes through mask A2, it is condensed by lens L3 and incident on beam splitter BS2. Lens holding cylinder 74 and inclination member 76 shown in Figs. 11 to 13 may be adopted as the optical system that allows reference beam R to be incident on beam splitter BS2.

<J. Modification>

The optical systems described above are by way of example, and depending on required specifications or restriction imposed by a space or the like, any optically equivalent modification can be made. For example, a single lens may be modified to a lens assembly, or any reflection member can be employed instead of the mirror.

Though processing apparatus 100 performs computing processing involved with measurement of sample S in the exemplary configuration described above, for example, a computing resource on a cloud may be used to perform a part or the entirety of computing processing involved with measurement.

<K. Summary>

The optical measurement system according to the present embodiment can reproduce an image at the sample surface distant by any distance from the recording surface of the image sensor and reproduce an image at the sample surface at any inclination with respect to the recording surface of the image sensor. Whichever shape the sample may have and however the sample may be arranged, an image at a target surface can thus be reproduced.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

REFERENCE SIGNS LIST

1 optical measurement system; 10 optical measurement apparatus; 20 light source; 30 measurement optical system; 40 recording surface; 42 origin; 50 sample surface; 70 base; 72 holding member; 74 lens holding cylinder; 76 inclination member; 78 recording unit; 100 processing apparatus; 102 processor; 104 main storage; 106 input device; 108 display; 110 auxiliary storage; 112 operating system; 114 measurement program; 116 hologram data; 118 measurement result; 120 interface; 122 network interface; 124 medium drive; 126 recording medium; 150, 160, 170 user interface screen; 151, 152, 153, 161, 162, 163, 171 operation object; 172 two-dimensional map; 173 point; 174 azimuth angle; 175 distance; 760, 762 surface; 764 opening; A1, A2 mask; BE beam expander; BS1, BS2 beam splitter; D image sensor; FP2 focal point; L1, L2, L3, L11, L12 lens; M3, M10, M12, M14 mirror; MM movable mirror; O object beam; R reference beam; S sample; SP1, SP2 opening pattern.

**Claims**

1. An optical measurement system comprising:

    a light source configured to generate coherent light;
    a first beam splitter configured to divide the coherent light from the light source into first light and second light;
    an image sensor configured to record a hologram generated by modulation with the second light, of light obtained by illumination of a sample with the first light; and
    a processing apparatus, wherein
    the second light is diverging light,

the processing apparatus is configured to perform

calculating a second hologram representing an image at a position distant by a predetermined distance from the image sensor based on a first hologram which is the hologram recorded by the image sensor, and calculating, based on the second hologram, a third hologram representing an image at an inclined surface set at an inclination with respect to a recording surface of the image sensor, and

calculating the third hologram includes coordinate transformation in accordance with an angle of the inclined surface.

2. The optical measurement system according to claim 1, wherein
the coordinate transformation in accordance with the angle of the inclined surface includes

calculating a first spectrum by Fourier transform of the second hologram,
calculating from the first spectrum, a wave number vector of each plane wave included in the second hologram,
calculating a wave number vector resulting from rotation of each plane wave, by multiplying the wave number vector of the each plane wave by a three-dimensional rotational matrix corresponding to the angle of the inclined surface, and
calculating a second spectrum representing the image at the inclined surface, based on the first spectrum and the wave number vector resulting from rotation of the each plane wave.

3. The optical measurement system according to claim 1 or 2, wherein
the processing apparatus is configured to perform providing a user interface screen including an object for receiving a setting of the inclined surface.

4. The optical measurement system according to claim 3, wherein
the user interface screen further includes an object for receiving a designation of the predetermined distance.

5. The optical measurement system according to any one of claims 1 to 4, wherein
the processing apparatus is further configured to perform outputting, based on the third hologram, at least one of a geometrical profile of the inclined surface or a refractive index profile of the inclined surface as a measurement result.

6. The optical measurement system according to any one of claims 1 to 5, further comprising:

a second beam splitter configured to modulate with the second light, light obtained by illumination of the sample with the first light;
a lens configured to condense the second light;
a lens holding cylinder configured to hold the lens; and
an inclination member configured to arrange a central axis of the lens holding cylinder at a predetermined inclination with respect to a central optical axis of the second beam splitter.

7. The optical measurement system according to any one of claims 1 to 5, further comprising:

a second beam splitter configured to modulate with the second light, light obtained by illumination of the sample with the first light;
a first lens configured to condense the first light, the first lens being arranged opposite to the second beam splitter with respect to the sample;
a second lens configured to condense the first light, the second lens being arranged at a side the same as the second beam splitter with respect to the sample; and
an optical member configured to switch to which of the first lens and the second lens the first light is guided.

8. An optical measurement method using an optical measurement apparatus, the optical measurement apparatus comprising a light source configured to generate coherent light, a first beam splitter configured to divide the coherent light from the light source into first light and second light, and an image sensor configured to record a hologram generated by modulation with the second light, of light obtained by illumination of a sample with the first light, the second light being diverging light, the optical measurement method comprising:

calculating a second hologram representing an image at a position distant by a predetermined distance from the image sensor based on a first hologram which is the hologram recorded by the image sensor; and

calculating, based on the second hologram, a third hologram representing an image at an inclined surface set at an inclination with respect to a recording surface of the image sensor, wherein

calculating the third hologram includes coordinate transformation in accordance with an angle of the inclined surface.

9. A measurement program executed by a computer connected to an optical measurement apparatus, the optical measurement apparatus comprising a light source configured to generate coherent light, a first beam splitter configured to divide the coherent light from the light source into first light and second light, and an image sensor configured to record a hologram generated by modulation with the second light, of light obtained by illumination of a sample with the first light, the second light being diverging light, the measurement program causing the computer to perform:

calculating a second hologram representing an image at a position distant by a predetermined distance from the image sensor based on a first hologram which is the hologram recorded by the image sensor; and

calculating, based on the second hologram, a third hologram representing an image at an inclined surface set at an inclination with respect to a recording surface of the image sensor, wherein

calculating the third hologram includes coordinate transformation in accordance with an angle of the inclined surface.

FIG.1

# FIG.2

FIG.3

<u>100</u>

```
┌──────────────┐  ┌──────────────┐  ┌──────────────┐  ┌──────────────┐
│  102         │  │  104         │  │  106         │  │  108         │
│  PROCESSOR   │  │ MAIN STORAGE │  │ INPUT DEVICE │  │  DISPLAY     │
└──────────────┘  └──────────────┘  └──────────────┘  └──────────────┘
```

```
                  ┌──────────────┐  ┌──────────────┐  ┌──────────────┐
         110      │  120         │  │  122         │  │  124         │
                  │  INTERFACE   │  │  NETWORK     │  │ MEDIUM DRIVE │
  ┌─────────────┐ │              │  │  INTERFACE   │  │              │
  │    OS       │─ 112           └──────────────┘  └──────────────┘
  ├─────────────┤                                         126
  │ MEASUREMENT │─ 114
  │ PROGRAM     │
  ├─────────────┤
  │HOLOGRAM DATA│─ 116
  ├─────────────┤
  │ MEASUREMENT │─ 118
  │ RESULT      │
  └─────────────┘
```

MEASUREMENT
APPARATUS 10

FIG.4

# FIG.5

(A)

DISTANCE — 151

INCLINATION

AZIMUTH ANGLE — 152

INCLINATION ANGLE — 153

150

(B)

150

$\theta_1$

X, Y, Z

$\theta_2$

50

FIG.6

(A)

DISTANCE ——————————[]—————————— —161

INCLINATION

X ——————————[]—————————— —162

Y ——————————[]—————————— —163

—160

(B)

# FIG.7

DISTANCE

INCLINATION

## FIG.8

```
        ( MEASUREMENT )
        ( PROCESSING  )
                │
                ▼                    ⌐S2
        OBTAIN OBJECT BEAM HOLOGRAM U
                │
                ▼                    ⌐S4
        OBTAIN DISTANCE d TO SAMPLE
        SURFACE
                │
                ▼                    ⌐S6
        CALCULATE HOLOGRAM Ud (x, y) BY
        ALLOWING REPRODUCTION OBJECT
        BEAM HOLOGRAM UΣ (x, y) TO
        PROPAGATE BY DISTANCE d
                │
                ▼                    ⌐S8
        CALCULATE HOLOGRAM Qd (x, y)
        BY ALLOWING ILLUMINATION LIGHT
        HOLOGRAM QΣ (x, y) TO
        PROPAGATE BY DISTANCE d
                │
                ▼                    ⌐S10
        OBTAIN DESIGNATION OF INCLINED
        SURFACE
                │
                ▼                    ⌐S12
        CALCULATE THREE-DIMENSIONAL
        ROTATIONAL MATRIX TR
        CORRESPONDING TO DESIGNATION OF
        INCLINED SURFACE
                │
                ▼                    ⌐S14
        CALCULATE SPECTRUM F [Ud] (u, v) BY
        FOURIER TRANSFORM OF HOLOGRAM
        Ud (x, y)
                │
                ▼                    ⌐S16
        CALCULATE WAVE NUMBER VECTOR k
        OF EACH PLANE WAVE FROM
        SPECTRUM F [Ud] (u, v)
                │
                ▼                    ⌐S18
        CALCULATE WAVE NUMBER VECTOR k'
        OF EACH PLANE WAVE BY USING
        THREE-DIMENSIONAL ROTATIONAL
        MATRIX TR
                │
                ▼                    ⌐S20
        CALCULATE SPECTRUM F [UT] (u, v)
        BASED ON SPECTRUM F [Ud] (u, v)
        AND WAVE NUMBER VECTOR k' OF
        EACH PLANE WAVE
                │
                └──────────────────────┐
```

```
                ┌──────────────────────┘
                ▼                    ⌐S22
        CALCULATE HOLOGRAM UT (x, y)
        REPRESENTING IMAGE AT
        INCLINED SURFACE
                │
                ▼                    ⌐S24
        CALCULATE SPECTRUM F [Qd] (u, v)
        BY FOURIER TRANSFORM OF
        HOLOGRAM Qd (x, y)
                │
                ▼                    ⌐S26
        CALCULATE WAVE NUMBER VECTOR k
        OF EACH PLANE WAVE FROM
        SPECTRUM F [Qd] (u, v)
                │
                ▼                    ⌐S28
        CALCULATE WAVE NUMBER VECTOR k'
        OF EACH PLANE WAVE BY USING
        THREE-DIMENSIONAL ROTATIONAL
        MATRIX TR
                │
                ▼                    ⌐S30
        CALCULATE SPECTRUM F [QT] (u, v)
        BASED ON SPECTRUM F [Qd] (u, v)
        AND WAVE NUMBER VECTOR k' OF
        EACH PLANE WAVE
                │
                ▼                    ⌐S32
        CALCULATE HOLOGRAM QT (x, y)
        REPRESENTING IMAGE
        AT INCLINED SURFACE
                │
                ▼                    ⌐S34
        CALCULATE AMPLITUDE PHASE
        DISTRIBUTION UPT (x, y) AT
        SAMPLE SURFACE
                │
                ▼                    ⌐S36
        OUTPUT RESULT OF MEASUREMENT
        OF SAMPLE BASED ON AMPLITUDE
        PHASE DISTRIBUTION UPT (x, y)
                │
                ▼
            (  END  )
```

FIG.9

(A)

(B)

FIG.10

(A)

(B)

EP 4 786 917 A1

FIG.11

FIG.12

EP 4 786 917 A1

FIG.13

FIG.14

EP 4 786 917 A1

FIG.15

## INTERNATIONAL SEARCH REPORT

| International application No. |
|---|
| **PCT/JP2023/035604** |

### A. CLASSIFICATION OF SUBJECT MATTER

***G01B 11/24***(2006.01)i; ***G01B 9/021***(2006.01)i; ***G01N 21/45***(2006.01)i
FI:    G01B11/24 D; G01B9/021; G01N21/45 A

According to International Patent Classification (IPC) or to both national classification and IPC

### B. FIELDS SEARCHED

Minimum documentation searched (classification system followed by classification symbols)

G01B11/24; G01B9/021; G01N21/45; G03H1/00; G01J9/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 7157505 B1 (OTSUKA DENSHI CO., LTD.) 20 October 2022 (2022-10-20) paragraphs [0026]-[0037], [0071]-[0083], [0182]-[0185], fig. 1, 13(A) | 1-2, 5, 8-9 |
| Y | | 3-4, 6-7 |
| Y | US 2017/0123375 A1 (ELECTRONICS AND TELECOMMUNICATIONS RESEARCH INSTITUTE) 04 May 2017 (2017-05-04) paragraphs [0036], [0053], fig. 1, 6 | 3-4 |
| Y | WO 2019/044336 A1 (UNIVERSITY OF HYOGO) 07 March 2019 (2019-03-07) paragraph [0080] | 6 |
| Y | CN 115826381 A (XI'AN UNIVERSITY OF TECHNOLOGY) 21 March 2023 (2023-03-21) paragraphs [0022]-[0027], fig. 1-2 | 7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/035604**

| Patent document cited in search report | | | Publication date (day/month/year) | Patent family member(s) | Publication date (day/month/year) |
|---|---|---|---|---|---|
| JP | 7157505 | B1 | 20 October 2022 | (Family: none) | |
| US | 2017/0123375 | A1 | 04 May 2017 | KR 10-2017-0052307 A paragraphs [0036], [0046], fig. 1, 6 | |
| WO | 2019/044336 | A1 | 07 March 2019 | US 2020/0264559 A1 paragraph [0128] EP 3677969 A1 | |
| CN | 115826381 | A | 21 March 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022137560 A
- WO 2022138716 A

- WO 2020045584 A